# EUROPEAN PATENT APPLICATION

(11) **EP 1 097 864 A1**
(43) Date of publication of application: **09.05.2001**
(21) Application number: 00309432.3
(22) Date of filing: 26.10.2000
(51) Int. Cl.: B64D 11/06, B60N 2/34

(54) **Improvements in and relating to seats for passenger vehicles**

(30) Priority: 04.11.1999 GB 9926170; 03.03.2000 GB 0005242
(71) Applicant: Reynard Aviation Limited, Brackley, Northamptonshire NN13 7RP (GB)
(72) Inventor: Thompson, James Hanna, Kilkeel, County Down, BT34 4SR (GB)
(74) Representative: Crump, Julian Richard John

(57) **Abstract**

A seat for passenger vehicle comprising a first fixed portion for supporting the seat adjacent to the floor of a vehicle; a second moveable portion comprising a back-rest, a seat-pan and a leg-rest that is pivoted relative to the seat-pan; reclining means for causing or allowing movement of the moveable portion of the seat relative to the fixed portion between an upright position and a fully reclined position, such that as the moveable portion is reclined, the seat-pan is lowered towards the floor of the vehicle and the leg-rest remains in contact with the floor, such that the leg-rest is caused or allowed to pivot from a stowed position to a deployed position; characterised in that the leg-rest comprises a floor-engaging trundling member, a leg-supporting member that is pivoted relative to the trundling member, selectively operable actuating means that react against the seat-pan for moving the leg-supporting member to any desired position between said stowed and deployed positions independently of movement of the seat-pan, and lost-motion means between the actuating means and the seat-pan to allow the leg-rest to be moved to the deployed position when the seat is reclined independently of the actuating means.

## Description

The present invention relates to a seat for a passenger vehicle, particularly an aircraft. The present invention includes a passenger vehicle such, for example, as an aircraft, that is fitted with one or more seats in accordance with the invention.

EP-A-0869061 (Reynard Aviation Ltd), the contents of which are fully incorporated herein by reference, discloses a seat for a passenger vehicle comprising a first fixed portion for supporting the seat adjacent to floor of a vehicle; a second movable portion comprising a back-rest, a seat-pan and a leg-rest that is pivoted relative to the seat-pan; reclining means for causing or allowing movement of the movable portion of the seat relative to the fixed portion between an upright position and a fully reclined position, such that as the movable portion is reclined, the seat-pan is lowered towards the floor of the vehicle and the leg-rest remains in contact with the floor, such that the leg-rest is caused or allowed to pivot from a stowed position to a deployed position. Seats of this kind are referred to herein as seats of the kind described.

According to EP-A-0869061, the back-rest is pivoted relative to the seat-pan for movement between an upright position and a fully reclined position. A locking driving means such, for example, as a motorised linear actuator, is fitted between the seat-pan and the leg-rest, and free-pivoting is allowed at the joint between the back-rest and the seat-pan. The reclining means of the seat includes guiding means for guiding movement of the movable part, such that as the movable part is moved from the upright position to the fully reclined position, the back-rest is reclined and lowered translationally towards the floor of the vehicle. The linear actuator is operated according to the position of the movable part between the upright and fully reclined positions. As free-pivoting is permitted at the joint between the back-rest and the seat-pan, it will be appreciated that the leg-rest remains in contact with the floor, and the orientation of the seat-pan at any position of the movable part depends on the position and orientation of the back-rest and the extension of the linear actuator. The orientation of the back-rest is fixed by the guiding means, and the angle subtended by the seat-pan and leg-rest is fixed by the linear actuator. The linear actuator is thus operated as the seat is reclined to ensure that the back-rest, seat-pan and leg-rest move through a sequence of ergonomically comfortable positions.

The seat of EP-A-0869061 is advantageous because the leg-rest can be used to support part of the weight of the seat of the floor of the vehicle. Moreover, the back-rest, seat-pan and leg-rest can be manoeuvred to form a substantially flat surface, i.e. a bed, when the seat is in the fully reclined position. In the fully reclined position, the back-rest, seat-pan and leg-rest are disposed adjacent to the floor of the aircraft, and so the leg-rest may extend into a recess or foot-well defined under a seat in front. In this way, a plurality of seats can be arranged on a vehicle one behind another within a pitch of about 1.4 metres (55 inches), which is a pitch within a range conventionally adopted for seats in a business-class section of a passenger aircraft, with each seat being capable of being reclined fully to form a substantially flat surface or bed for a passenger using the seat to sleep on.

However, a disadvantage of the seat of EP-A-0869061 is that the leg-rest cannot be moved between its lowered and raised positions independently of movement of the back-rest and seat-pan. Thus, in particular, it is not possible to deploy the leg-rest when the seat as a whole is in the upright position.

It is an object of the present invention to provide an improved seat for a passenger vehicle, particularly an aircraft.

In particular, it is an object of the present invention to provide an improved seat of the kind described by EP-A-0869061 in which the leg-rest may be raised or lowered independently of movement of the seat between the upright and fully reclined positions.

Another object of the present invention is to provide such a seat for a passenger vehicle which can selectively be manoeuvred to a fully reclined position in which the back-rest, seat-pan and leg-rest form a substantially flat surface for sleeping on.

In accordance with the present invention, therefore, there is provided a seat of the kind described which is characterised in that the leg-rest comprises a floor-engaging trundling member, a leg-supporting member that is pivoted relative to the said trundling member, selectively operable actuating means that react against the seat-pan for moving the leg-supporting member to any desired position between said stowed and deployed positions independently of movement of the seat-pan, and lost-motion means between the actuating means and the seat-pan to allow the leg-rest to be moved to the deployed position when the seat is reclined independently of the actuating means.

Thus, according to the present invention there is provided a seat of the kind described in which the leg-rest can be raised or lowered independently of movement of the movable part of the seat as a whole when the seat is in the upright position. As the seat is moved towards the fully reclined position, the leg-supporting member is allowed to move towards the deployed position by the lost motion means, without requiring operation of the actuating means.

Preferably, the seat reclining means comprise a free-pivot between the back-rest and the seat-pan; locking driving means are preferably provided between the seat-pan and leg-rest for driving the leg-rest between said stowed and deployed positions as the movable portion of the seat is reclined. In some embodiments, said locking driving means may comprise a linear actuator and a selectively operable, bi-directional motor for operating the actuator. Said linear actuator may be connected between the motor and said floor-engaging trundling member. Said motor may be mounted to and beneath the seat-pan, and the actuator may be connected to the trundling member by first lever means. Conveniently, the actuator may also be connected to the seat-pan by second lever means for additional support. In some embodiments said linear actuator may comprise a transverse torsion bar that is suspended from the seat-pan by two or more depending levers. Said first lever means may comprise two or more further connecting levers between said depending levers and said trundling member.

Said floor-engaging trundling member will typically be provided with abutment means that are adapted to engage the leg-supporting member for pushing the leg-support member from the stowed position to the deployed position when the linear actuator is operated to drive the trundling member. In this way, movement of the trundling member from the stowed position to the deployed position will cause corresponding movement of the leg-supporting member when the trundling member abuts the leg-supporting member, with the movement of the leg-supporting member being accommodated by said lost motion means. When the leg-supporting member is deployed independently of the trundling member, the leg-supporting member will separate from the trundling member, and thus subsequent operation of the linear actuator will not cause further movement of the leg-supporting member until the trundling member catches-up with and engages the leg-supporting member. Thereafter, further movement of the trundling member will cause a concomitant movement of the leg-supporting member, which further movement of the leg-supporting member will be accommodated by said lost motion means.

Said reclining means may further comprise means for progressively rocking the back-rest from an upright position to a fully reclined position as the movable part is moved between said upright and fully reclined positions. Said reclining means may comprise track means on said fixed part of the seat, and guiding means on the back-rest adapted to engage the track means at two or more spaced positions, whereby as the seat is reclined, the guiding means move along the track, and the track is configured such that the back-rest is progressively rocked from the upright position to the fully reclined position.

Preferably in accordance with the invention, in the fully reclined position, the back-rest, seat-pan and leg-rest form a substantially flat surface. Thus, the seat of the present invention may be converted into a bed in the fully reclined position. In some embodiments, said flat surface in the fully reclined position may subtend an angle of about 10-15°, preferably about 11-13°, with the floor of the aircraft.

Said track means may accommodate a rack, and said back-rest may carry one or more pinions adapted to engage the rack and selectively operable, bi-directional motor means for driving said one or more pinions, thereby to cause movement of said movable portion along the track between said upright and reclined positions.

Advantageously, said motor means for driving said pinion(s) may be mounted on the back of the back-rest.

Said selectively operable actuating means may comprise a linearly extendable member that is connected to the leg-support member at one end and to said lost motion means at the other end. In some embodiments, said lost motion means may be connected to said linear actuator. Conveniently, the linearly extendable member may be pneumatically operated, for instance a gas strut.

Said lost motion means may comprise a rockable arm that is adapted to engage an abutment on the seat-pan for that purpose, and can be displaced therefrom as the seat is reclined to allow the leg-rest to move to the deployed position. Said trundling member may comprise a stop member that is adapted to entrap the rockable arm in the stowed position when the trundling member is in the stowed position, so as to prevent the leg-supporting member from being inadvertently moved to the deployed position, for instance under dynamic load conditions, as in the case of an emergency landing for example. Said rockable member may carry a second stop member that is adapted to engage the first lever means between the linear actuator and the trundling member to prevent the rockable arm from being moved to an over-centre position.

Alternatively, said lost motion means may comprise a slideway and travelling means imprisoned by and adapted to slide within said slideway, which slideway is held fast in relation to the seat-pan when the trundling means are at rest. Said other end of the linearly extendable member may be connected to said travelling means, whereby said other end is able to move relative to said seat-pan to provide lost motion in relation thereto. Said travelling means may be adapted to engage abutment means on the seat-pan for the linearly extendable member to react against, and may be displaced therefrom along the slideway as the seat is reclined to allow the leg-rest to move to the deployed position. Preferably retaining means are provided for retaining the travelling member in a fixed datum position when the seat is upright to prevent the leg-supporting member from being inadvertently moved to the deployed position. Said slideway may be affixed to said seat-pan, but conveniently the slideway is carried by said linear actuator such that the slideway is caused to move forwardly as the seat is reclined. Said abutment means on the seat-pan may advantageously be positioned to imprison the travelling means in said fixed datum position when the seat is upright and the trundling member is stowed, and when the linear actuator is operated, said slideway may be displaced relative to said abutment means so as to release the travelling means from said datum position and allow said lost motion. In some embodiments said slideway may have a generally L-shaped configuration, with the datum position being disposed at the elbow of the L-shape. Said abutment means may comprise one or more hook-shaped members attached to the underside of said seat-pan and positioned to retain said travelling means in the elbow of the L-shape when the trundling member is stowed.

Preferably, said reclining means further comprise controlling means for controlling operation of the locking drive means according to the position of the seat between the upright and fully reclined positions. Said controlling means may comprise means for detecting the position of the movable part of the seat between the upright and fully reclined positions, a memory device for storing information concerning the desired extension of the linear actuator according to the position of the movable part, and processing means adapted to control operation of the linear actuator in response to input from said memory device and said detecting means.

The present invention thus provides a seat for a passenger vehicle, particularly an aircraft, of the kind described which has all the advantages of the seat of EP-A-0869061, but has the additional advantage that the leg-supporting member can be deployed independently of movement of the seat as a whole to the reclined position. When the seat is in the upright position or an intermediate position, operation of the actuating means causes the actuating means to push the leg-supporting member away from the seat-pan through the lost motion means. On the other hand, when the seat is in the upright position, the lost motion means allow the leg-supporting member to be moved to the deployed position independently of operation of the actuating means. If the leg-supporting means is deployed, and the seat is subsequently reclined, the movable part of the seat will move until the trundling member re-engages the leg-supporting member, whereafter continued movement of the movable part of the seat towards the fully reclined position will cause the trundling-member to push the leg-supporting member further towards the fully deployed position, which movement will be accommodated by the lost motion means.

Following is a description by way of example only with reference to the accompanying drawings of embodiments of the present invention.
Figure 1 is an isometric view from above and to one side of the front of a seating unit comprising two seats in accordance with a first embodiment of the present invention.
Figure 2 is an isometric view from above and to one side of the rear of the seating unit of Figure 1.
Figure 3 shows an isometric view from above and to one side of the front of the supporting space-frame of the seating unit Figures 1 and 2.
Figure 4 is a side elevation of one of the seats of the seating unit of Figures 1 and 2 in accordance with the present invention.
Figure 5 is a isometric view showing the rear surface of the back-rest of the seat of Figure 4.
Figure 6 is a side view of the back-rest of Figure 5.
Figure 7 is a rear elevation, partly in cross-section on the line VII-VII of Figure 5 of the drive mechanism of the seat of Figure 4.
Figure 8 is an enlargement of part of the drive mechanism of figure 7.
Figure 9 is an enlarged side view, partly in cross-section of the seat of Figure 4, showing the leg-rest assembly.
Figure 10 is an enlarged isometric front view from below and to one side of part of the leg-rest assembly of Figure 9.
Figure 11 is another enlarged side view of the leg-rest assembly shown in the deployed position.
Figure 12 is a side view of the seat shown in a first intermediate reclined position.
Figure 13 is an enlarged side view of the seat of Figure 12.
Figure 14 is another side view of the seat shown in a second intermediate position.
Figure 15 is an enlarged side view of the leg-rest assembly in the second intermediate position, with the upholstery removed for clarity.
Figure 16 is a side view of the seat in the fully reclined position.
Figure 17 is an enlarged side view of the leg-rest assembly in the fully deployed position, with the upholstery removed for clarity.
Figure 18 is a graph of the linear extension of the motorised linear actuator between the seat-pan and leg-rest assembly of the seat of Figure 4 verses the number of rotations of the electric motor for driving the back-rest.
Figure 19 is a side elevation of a seat in accordance with a second embodiment of the present invention in the upright position.
Figure 20 is an enlarged side view, partly in cross-section of the seat of Figure 19, showing the leg-rest assembly in the stowed position.
Figure 21 is another enlarged side view of the leg-rest of Figure 20 shown in the deployed position.
Figure 22 is a side view of the seat of Figure 19 shown in a first intermediate reclined position.
Figure 23 is an enlarged side view of the seat of Figure 22.
Figure 24 is an enlarged side view of the leg-rest assembly with the upholstery removed for clarity, showing the ottoman fully deployed, with the seat in an intermediate reclined position.
Figure 25 is another side view of the seat of the second embodiment shown in a second intermediate reclined position.
Figure 26 is an enlarged side view of the leg-rest assembly of the seat of the second embodiment in the second intermediate position, with the upholstery removed for clarity.
Figure 27 is a side view of the seat of the second embodiment in a fully reclined position.
Figure 28 is an enlarged side view of the leg-rest assembly of the seat of Figure 19 in the fully deployed position, with the upholstery removed for clarity.
Figure 29 is a side view of two seats in accordance with a first embodiment of the present invention as installed on a vehicle.

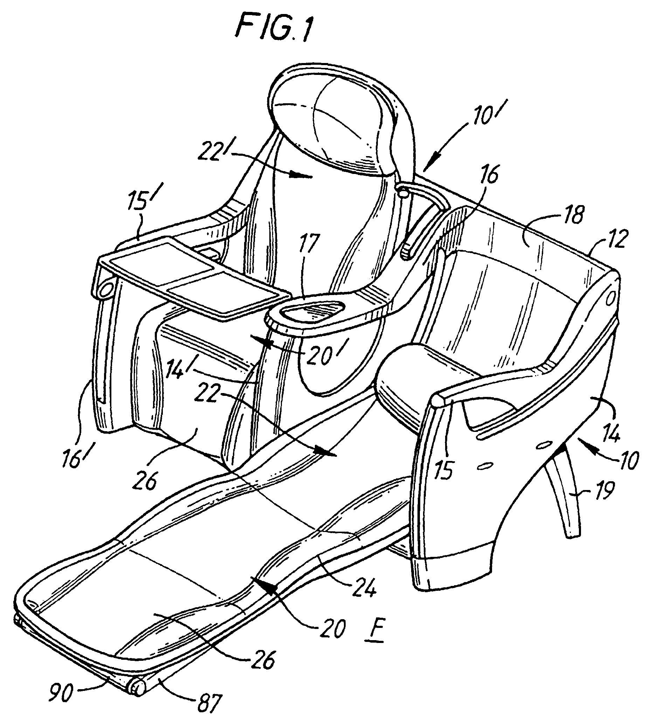

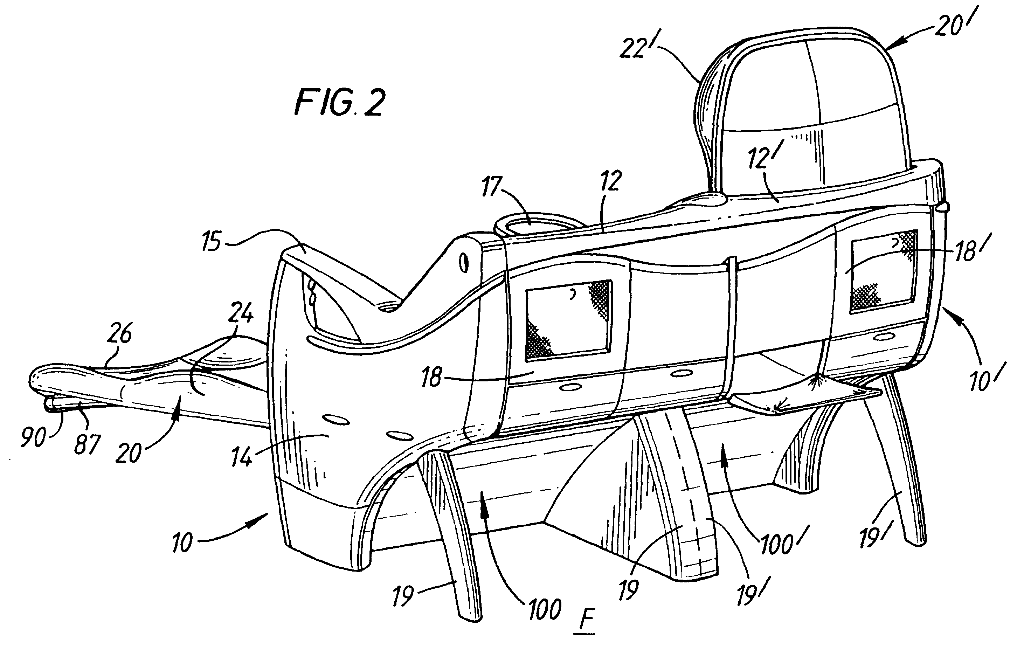

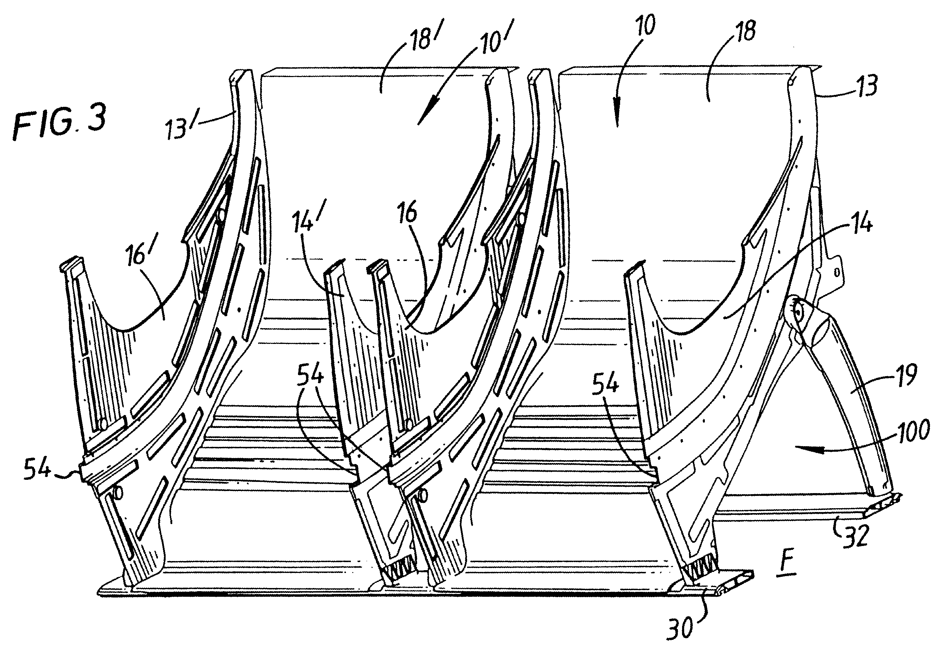

As shown in Figure 1 and 2 of the drawings, a seating unit for a vehicle in accordance with a first embodiment of the present invention comprises two adjacent, individual seats 10, 10'. Each seat 10, 10' comprises a fixed housing 12 having opposing side walls 14, 16, a back wall 18 and two spaced rear legs 19; and a movable part 20 that is accommodated within the fixed housing 12. As shown in Figure 3, each housing 12 comprises a substantially rigid sub-frame 13 that may be made from any suitable aircraft-grade structural material, preferably aluminium. The two housings are mounted side-by-side on two extruded, front and rear cross-beams 30, 32 and are clad from suitable plastics and/or composite materials to form an integrated seating unit, as shown in Figures 1 and 2. Whilst the seating unit described herein comprises two adjacent seats, it will be appreciated that in accordance with the invention, seating units comprising only one seat, or more than two seats may be provided.

The back wall 18 of each housing has a generally sinuous configuration, extended downwardly from the top of the housing to an intermediate point where the rear legs 19 are joined to the housing, and then forwardly and downwardly to meet the front cross-beam 30. Said rear legs 19 are spaced on opposing sides of the housing, and thus define with the back wall 18 a recess 100 under the seat which serves as a foot-well for a seat behind when installed on a vehicle.

When installed on an aircraft, the front and rear cross-beams 30, 32 will be suitably adapted to be secured to a pair of parallel seat tracks of the kind well known in the art provided in the floor of the aircraft F.

The two outer side walls 14, 16' of the two seats 10, 10' when mounted side-by-side are provided with individual arm-rests 15, 15', whilst the two adjacent side walls 16, 14' in the centre of the seating unit are clad to provide a unitary centre arm-rest 17. Similarly, the two adjacent rear legs 19, 19' at the centre of the seating unit may be provided with a unitary cladding, as shown in Figure 2 to give the appearance of a single rear centre leg.

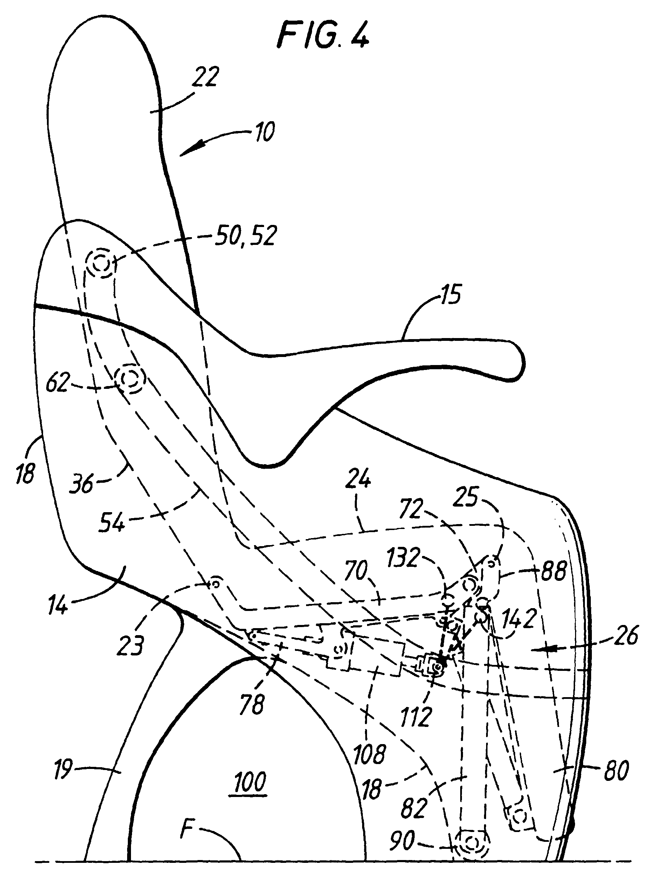

The movable part 20 of each seat 10, 10' comprises a back-rest 22, a seat-pan 24 and a leg-rest assembly 26. As shown in Figure 4, the back-rest 22 is pivoted at its lower end 23 to the seat-pan 24. Said seat-pan 24 is pivoted at its forward end 25 to the leg-rest assembly 26.

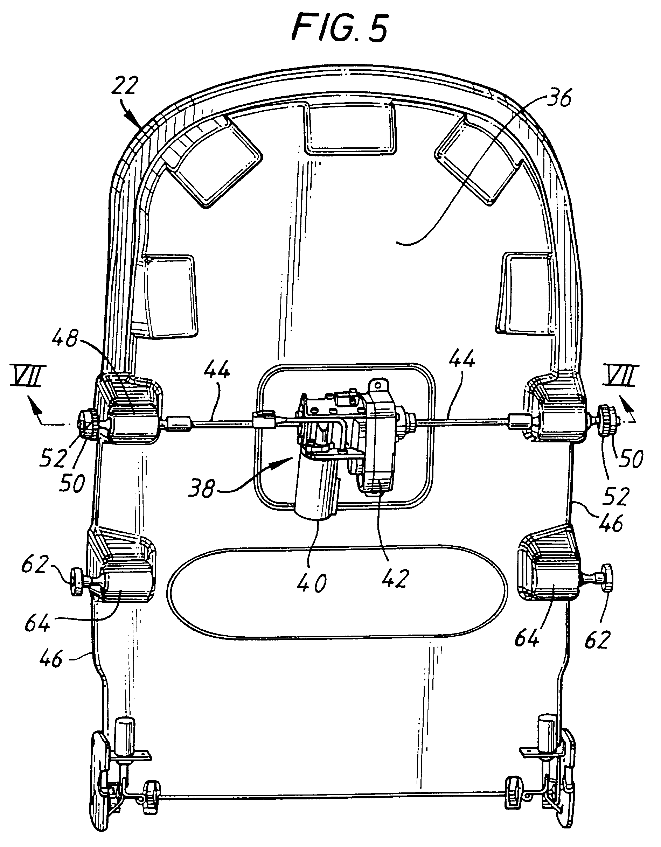

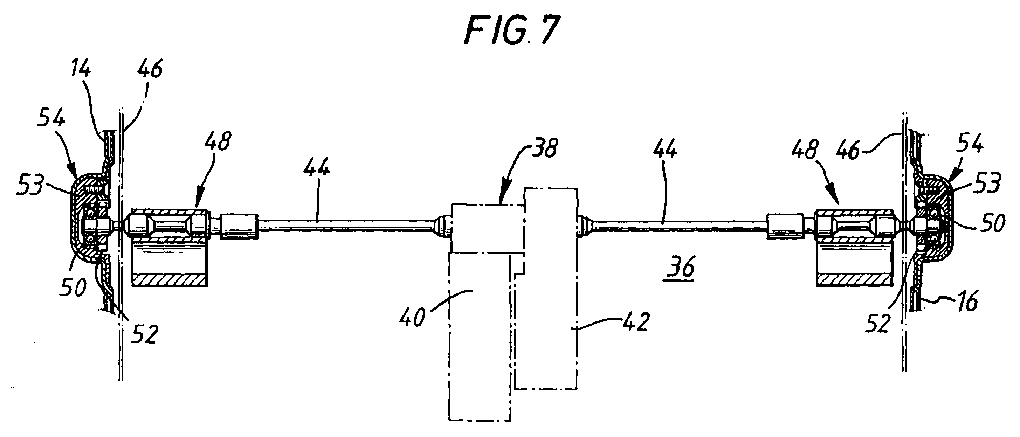

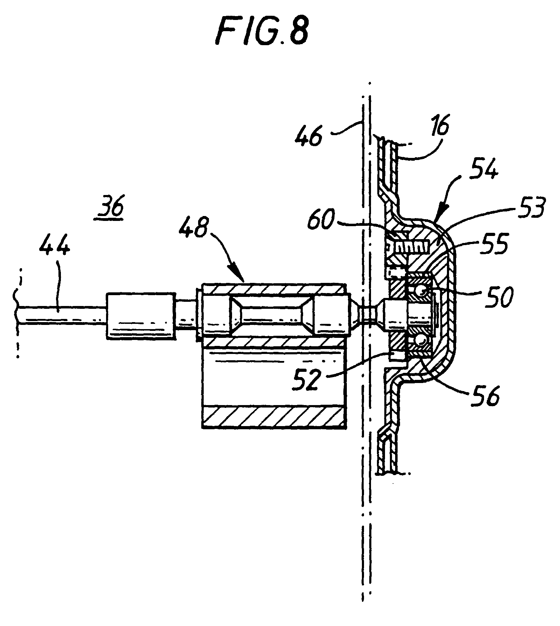

With reference to Figures 5, 6 and 7, the back-rest 22 has a rear surface 36 having a selectively operable, bi-directional drive unit 38 mounted thereon. Said drive unit comprises an electric motor 40 and a gear-box 42. The output of the electric motor 40 is connected via the gear-box 42 to two coaxial, transverse drive shafts 44. Each of said drive shafts 44 extends from the gear box 42 substantially horizontally to a respective lateral side 46 of the back-rest 22, where it is supported by a suitable bearing 48. As shown in detail in Figure 8, the end of each drive shaft 44 carries a roller 50 and, just inside the roller, a pinion 52 that is keyed on or otherwise fixedly secured to the end of the drive shaft 44 for rotation therewith.

The roller 50 and pinion 52 on the end of each drive shaft 44 are accommodated within an elongate, curvilinear channel 54 formed in the adjacent side wall 14, 16 of the fixed housing 12. Said channel 54 accommodates an elongate insert 53 that defines an elongate track for the roller 50. Said track has upper and lower bearing surfaces 55, 56 which are engaged by the roller 50. An elongate, curvilinear rack 60 is fixedly secured to an upper part of the insert 53 in engagement with the pinion 52.

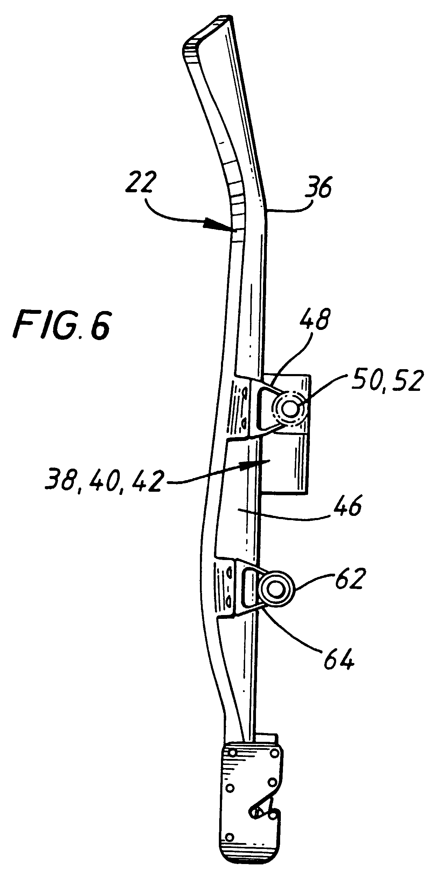

As shown in Figures 5 and 6, the rear surface 36 of the back rest 22 also carries, at each side 46 thereof, a second roller 62 that is suitably mounted for rotation in a bearing 64. The second rollers 62 are spaced from the rollers 50 on said drive shafts 44 and also engage in the track.

Said back-rest 22 is freely pivoted to the seat-pan 24 which comprises a sub-frame, including two forwardly-directed side frame members 70. Each of said side frame members 70 is formed with an upturned knee portion 72 at its forward end. A first transverse tube 74 extends between the frame members 70 and is mounted at each end to a respective one of the knee portions 72. Said first transverse tube supports a front edge of a thin metal diaphragm 75 that supports the upholstery of the seat-pan 24. The upper extremity of the knee portion 72 defines a pivot point 76 for pivoting the seat-pan to the leg-rest assembly 26. Said leg-rest assembly 26 comprises an ottoman 80 and a floor-engaging supporting portion 82. Said ottoman 80 comprises two spaced side arms 84, each of which has an L-shaped upper portion 85 which is pinned to the pivot point 76 of a respective knee portion 72 so that the ottoman 80 can pivot relative to the seat-pan 24 about said pivot point 76. Said L-shaped portion 85 defines a rearwardly directed shoulder 86 which serves as an abutment. Said side arms 84 carry between them a diaphragm 83 which supports the upholstery of the ottoman.

Said supporting portion 82 comprises two spaced levers 87, each of which has an angled portion 88 at its upper end which is pivoted to the seat-pan 24 at the pivot point 76. Conveniently, the angled portion 88 of each lever is pivoted to the knee portion 72 of the respective seat-pan frame member 70 using the same pin that is used for pivoting the ottoman 80 to the seat-pan 24. Said supporting portion 82 further comprises a ground-engaging roller 90 that is carried by and extends between the two levers 87.

Said seat-pan 24 carries a selectively operable, bi-directional, motorised linear actuator 110 that is suspended beneath the seat-pan 24 on two brackets 78. Said brackets 78 are mounted on pins that extend between the side frame members 70 of the seat-pan 24, and each bracket 78 comprises a forward, upturned tongue portion 79 that is reamed and threaded over the first transverse tube 74 to support the front end of the bracket 78.

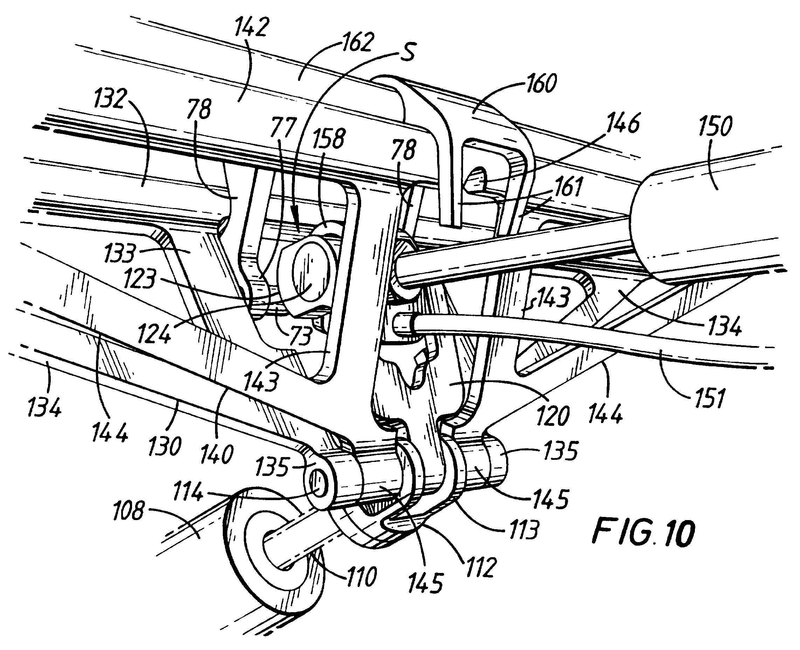

An electric motor 108 is mounted between the brackets 78 and is used to drive the linear actuator 110. By way of example, a Kollmorgen motor and Kollmorgen linear actuator may be used. As best seen in Figure 10, the linear actuator 110 comprises a nose portion 112 comprising a clevis 113. A pin 114 extends through the clevis 113 for pivotably attaching three separate components to the nose portion 112. In particular, said pin 114 carries a Y-shaped rockable arm 120 between the two limbs of the clevis 113, and two bifurcated links 130, 140 that are mounted on the pin 114 outside the limbs of the clevis 113.

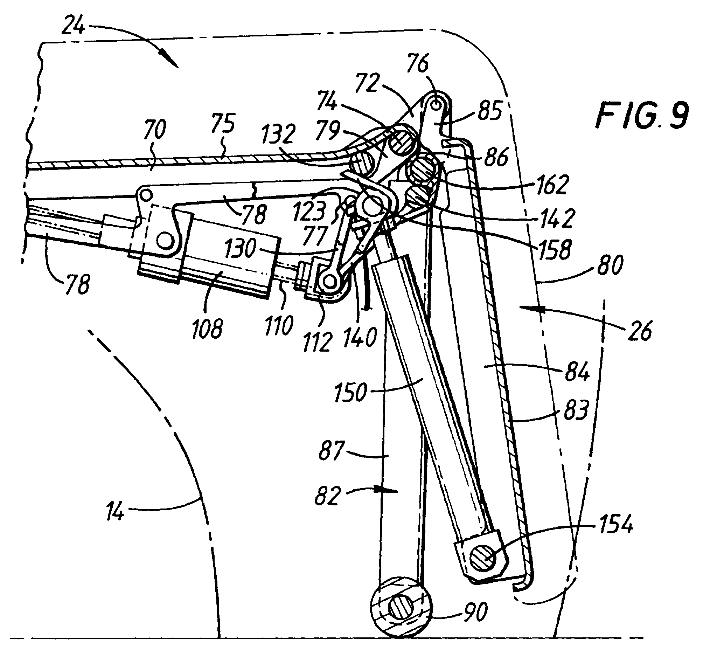

A first one of said links 130, comprises an integrant elongate, transverse tube 132 that extends between the two frame members 70 of the seat-pan, at a point rearwardly of the first transverse tube 74. As shown in Figure 9, the second transverse tube is disposed above the brackets 78, beneath the diaphragm 75 of the seat-pan. Said second transverse tube 132 is mounted to the frame member 70, such that the first bifurcated link 130 can pivot about said second transverse tube 132. Said second transverse tube 132 comprises two inner struts 133 and two outer struts 134. Each of said inner struts 133 is joined to the adjacent outer strut 134 at a point remote from the second transverse tube 132 to form a ring 135 that is mounted on said pin 114. The bifurcated link 130 thus supports the nose portion 112 of the linear actuator 110 beneath the seat-pan 24.

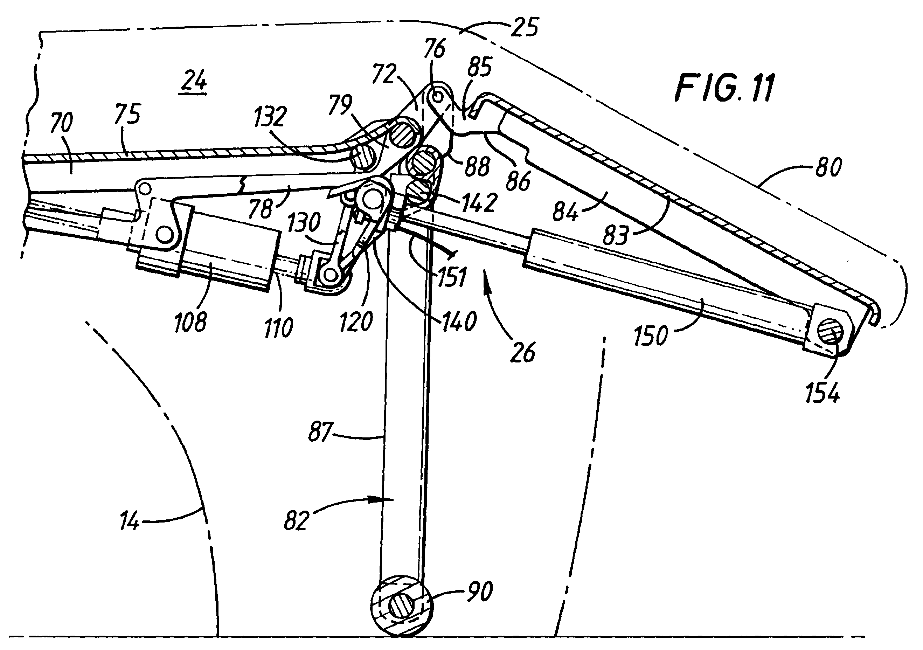

The other, second bifurcated link 140 has a similar construction to the first bifurcated link 130, comprising a third integrant transverse tube 142. Said third transverse tube as shown in Figures 9 and 11 extends between the angled portions 88 of the two levers 87 of the supporting portion 82 of the leg-rest assembly 26. Said third transverse tube 142 is mounted to the angled portions 88, so that the third transverse tube is capable of rotation such that the second bifurcated link 140 can pivot about the third transverse tube 142. Said transverse tube 142 is connected to the pin 114 on the linear actuator 110 by two inner struts 143 and two outer struts 144, and as with the first bifurcated link 130, each inner strut 143 of the second bifurcated link 140 is joined to the adjacent outer strut 140 to form a ring 145 that is mounted on the pin 114.

The inner struts 133, 143 of the first and second bifurcated links 130, 140 define an inner space S that accommodates the aforementioned Y-shaped rockable arm 120. Said brackets 78 extends through the inner space S and are each formed with a depending lug 77 generally beneath the second transverse tube 132, each lug 77 being drilled and carrying a short, inwardly directed abutment pin 73.

Said Y-shaped rockable arm 120 comprises two upstanding fingers 122. Said rockable arm 120 can pivot on said pin 114 through the inner space S, without engaging the inner struts 133, 143 of the first and second links, 130, 140. The upper extremity of each finger 122, remote from the pin 114, is formed with a lobe 123 which is drilled and reamed to accommodate a transverse pin 124 that extends between the two fingers 122 for carrying one end 152 of a gas strut 150. Said lobes 123 are configured to fit between the lugs 77 of the brackets 78 and, when the Y-shaped arm 20 is rocked rearwardly, the lobes 123 engage the abutment pins 73. The rear end 152 of the gas strut 150 fixedly carries an L-shaped plate 158 that extends over and rearwardly of the lugs 123 and comprises a trailing portion 159 that is narrower than and thus able to fit between the inner struts 133 of the first bifurcated link 130, but has a width greater than the separation of the inner struts 143 of the second bifurcated link 140. A forward end 154 of said gas strut 150 is pivoted to the lower end of the ottoman 80.

In Figures 4 and 9, the seat 10 is shown in an upright position with the leg-rest assembly 26 stowed. In this position, the linear actuator 110 is fully retracted, the gas strut 150 is in its 'short' position, and the lobes 123 on the rockable arm 120 abut the abutment pins 73 mounted on the lugs 77 of the motor mounting brackets 78. Said gas strut is operable in the usual manner by means of a actuating nipple (not shown) mounted on the rear end 152 of the gas strut 150. Said nipple can be operated by means of a Bowden cable 151 which extends through a hole formed in the L-shaped plate 158. The other end of the Bowden cable 151 is connected to a button or other suitable operating device within easy reach of a passenger using the seat 10. On pressing the button, the Bowden cable 151 is operated to actuate the nipple of the gas strut, thus causing the gas strut 150 to extend. Said gas strut acts between the abutment pins 73 on the brackets 78 and the forward end of the ottoman 80 remote from the pivot point 76. Extension of the gas strut 150 thus causes the ottoman 80 of the leg-rest assembly 26 to move from the stowed position of Figure 9 to a deployed position as shown in Figure 11. The leg-rest may be lowered by operating the nipple of the gas strut again by means of the Bowden cable 151, and then manually pressing downwardly on the ottoman 80, which a passenger may do, for example, using his or her legs, in order to return the ottoman 80 to the stowed position of Figure 9. As the ottoman 80 is moved to the stowed position, the gas strut 150 is shortened, and thus re-energised for subsequent extension.

As can be seen from Figure 10, the third transverse tube 142 is cut-out at 146 between the inner struts 143 of the second bifurcated link 140 to accommodate the gas strut 150 when the leg-rest is in the deployed position. Normally, the inherent resistance of the gas strut 150 itself will be sufficient to prevent unwanted movement of the ottoman away from the stowed position. However, in order to ensure that the ottoman is not operated during a dynamic load situation as, for example, in the event of an emergency landing, a fourth transverse tube 162 is fitted between the angled portions 88 of the levers 87. Intermediate said levers 87, said fourth transverse tube 160 carries a claw member 160 as best shown in Figure 10, comprising two spaced tines 161 that extend over, forwardly of and beneath the third transverse tube 142. Said tines 161 have a spacing which is substantially the same as the spacing of the lobes 123 on the rockable arm 120, and thus serve to engage said lobes 123 when the rockable arm 120 is rocked forwardly. The claw member 160 thus serves to prevent the rockable arm 120 from being moved beyond the second bifurcated link 140 when the seat is in the upright position. Thus, when the seat is in the upright position, the ottoman 80 can only be deployed by actuating the gas strut 150.

As can be seen from Figure 4, when the seat is in the upright position, the pinions 52 on each side of the back-rest 22 are positioned at the upper extremities of the channels 54. Operation of the drive unit 38 on the back of the back-rest 22 will cause the pinions to rotate in engagement with the racks 60 provided in the channels 54. As a result, the back-rest 22 will be caused to move translationally along the channels 54. The two spaced rollers 50, 62 on both sides of the back-rest 22 serve to fix the rotational orientation of the back-rest relative to the fixed housing 12. As can be seen best from Figure 4, the channels 54 are shaped, so that as the back-rest 22 is driven along the channels 54, the back-rest 22 is caused to recline progressively rearwardly.

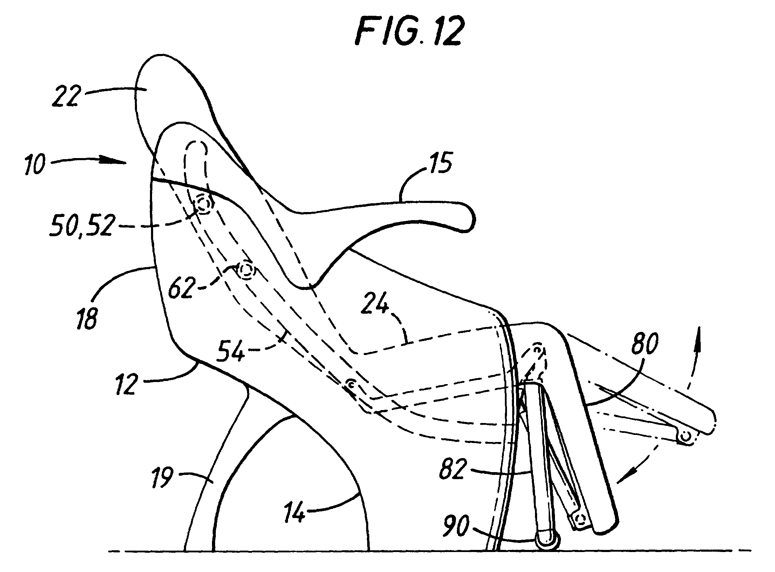

As the back-rest 22 is driven along the channels by the drive unit 38, the seat-pan 24 and leg-rest assembly 26 are pushed forwardly. As the seat-pan 24 is freely pivoted to the back-rest 22, the leg-rest assembly 26 remains in contact with the floor of the vehicle under the weight of the seat-pan 24 and leg-rest assembly 26 and the weight of a passenger using the seat 10. The orientation of the seat-pan is thus defined by the position and orientation of the back-rest 22 and the position and orientation of the leg-rest assembly 26. If the linear actuator 110 is not operated when the back-rest begins to recline, then as the back-rest is lowered translationally towards the floor F of the vehicle, it will be appreciated that the seat-pan will rock rearwardly as shown in Figure 12 to provide an ergonomically comfortable seating position.

Operation of the electric motor 108 causes the linear actuator 110 to be displaced forwardly. Such movement of the actuator 110 is accommodated by rocking of the first bifurcated link 130 about the second transverse tube 132. As the linear actuator 110 is moved forwardly, the second bifurcated link 140 pushes against the supporting portion 82 of the leg-rest assembly 26 which pivots about the pivot point 76 to increase the angle subtended by the supporting portion 82 and the seat-pan 24. As the supporting portion 82 of the leg-rest assembly 26 is rocked about the pivot point 76, the fourth transverse tube 162 rotates, lifting the claw member 160 away from the gas strut 150, thus allowing the rear end 152 of the gas strut 150 to be displaced from the abutment pins 73. As the supporting portion 82 rocks about the pivot point 76, the fourth transverse tube 162 pushes against the shoulder 86 of the ottoman 80, thus progressively raising the ottoman 80 to a deployed position. As the ottoman 80 is raised from the stowed position, without actuation of the gas strut 150, the rear end 152 of the gas strut 150 is pulled forwardly, and the Y-shaped rockable arm 120 rocks about the pin 114 as lost motion to allow movement of the ottoman to the deployed position. Thus, operation of the linear actuator 110 raises the ottoman 80 away from the stowed position to a deployed position and has the effect of lowering the forward end 25 of the seat-pan 24.

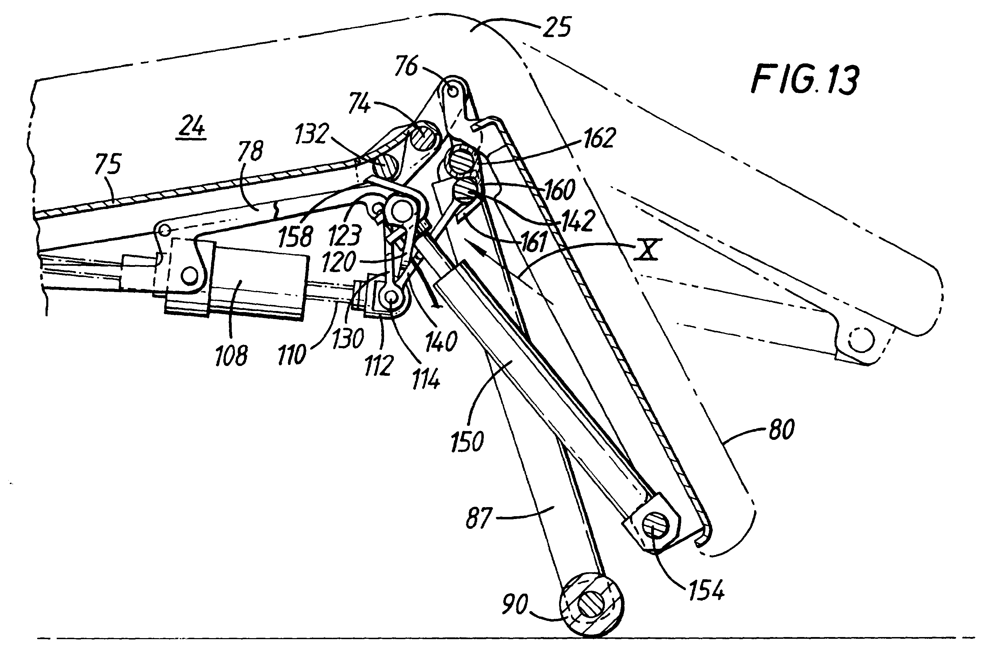

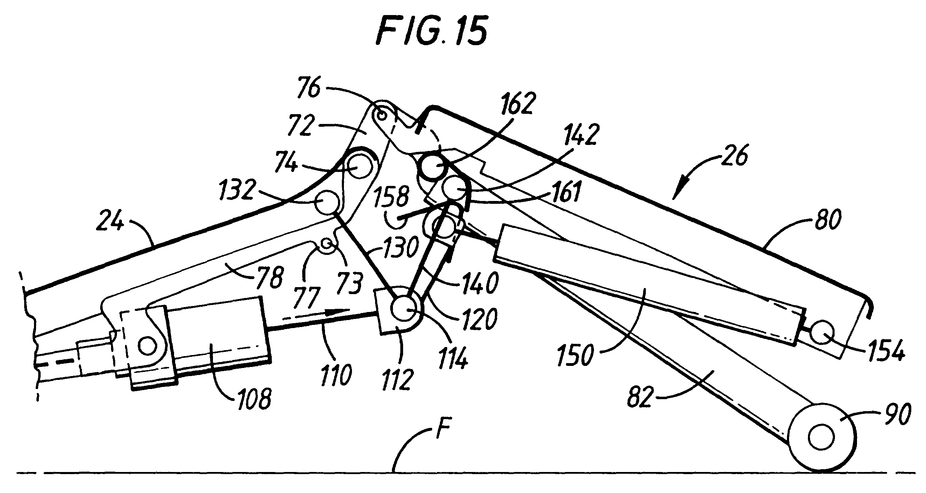

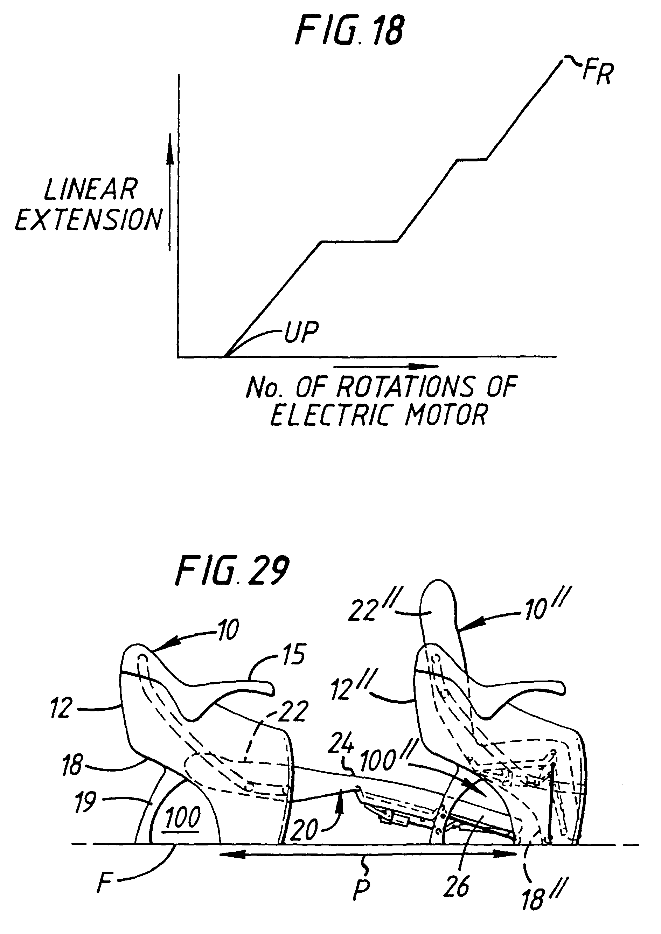

Conveniently, operation of the linear actuator 110 is controlled according to the position of the back-rest 22 along the channels 54. The position of the back-rest 22 along the channels 54 may be detected using suitable position detecting means such, for example, as Hall-effect devices. In the present embodiment, however, the operation of the electric motor 108 is controlled according to the number of rotations of the motor 40 from the upright position, according to a pre-determined programme. Figure 18 shows the linear extension of the linear actuator 110 according to the number of rotations of the electric motor 40 for driving the back-rest 22. As can be seen, when the back-rest 22 starts to travel, the linear actuator is not operated for a time, and as a result, the back-rest reclines, and the seat-pan tilts rearwardly as shown in Figure 12. On continued operation of the electric motor 40 of the drive unit to recline further the back-rest 22, the motor 108 is automatically operated to extend the linear actuator 110, thus raising the ottoman 80 from the stowed position, and lowering the front end 25 of the seat-pan 24. The movable part 20 of the seat 10 can be stopped in any desired position, and will be held in position by the locking actions of the motors 40 and 108. At any position, the gas strut 150 may be actuated to raise further the ottoman 80 as shown in Figures 12 and 13. As mentioned above, when the ottoman 80 is raised by operation of the linear actuator 110, without operation of the gas strut 150, the rear end of the gas strut 152 is eventually displaced from the abutment pins 73. Thus, if the gas strut is actuated when the seat is in a reclined position as shown, for example, in Figure 15, then extension of the gas strut 150 will first cause the Y-shaped arm 120 to rock rearwardly about the pivot 114 through the inner space S until the lobes 123 on the arm 120 re-engage the abutment pins 73. Thereafter, continued actuation of the gas strut 150 will cause the ottoman 80 to be raised as far as the gas strut will allow.

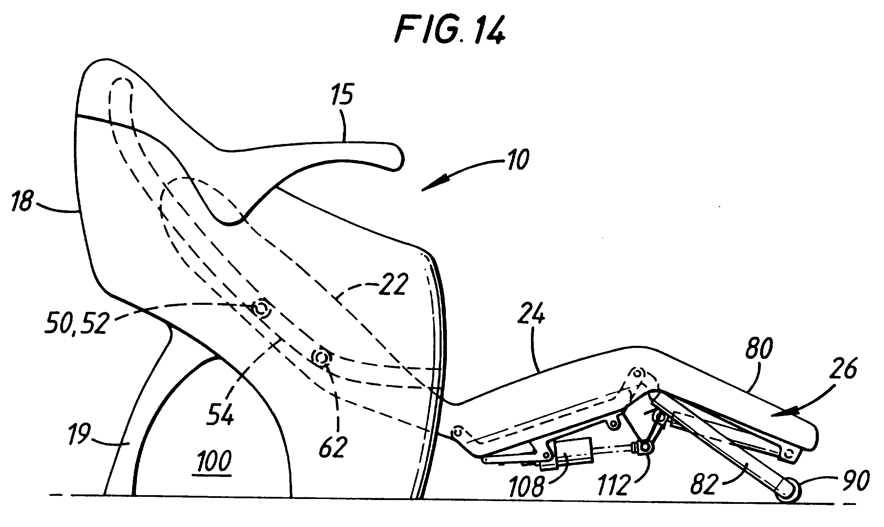

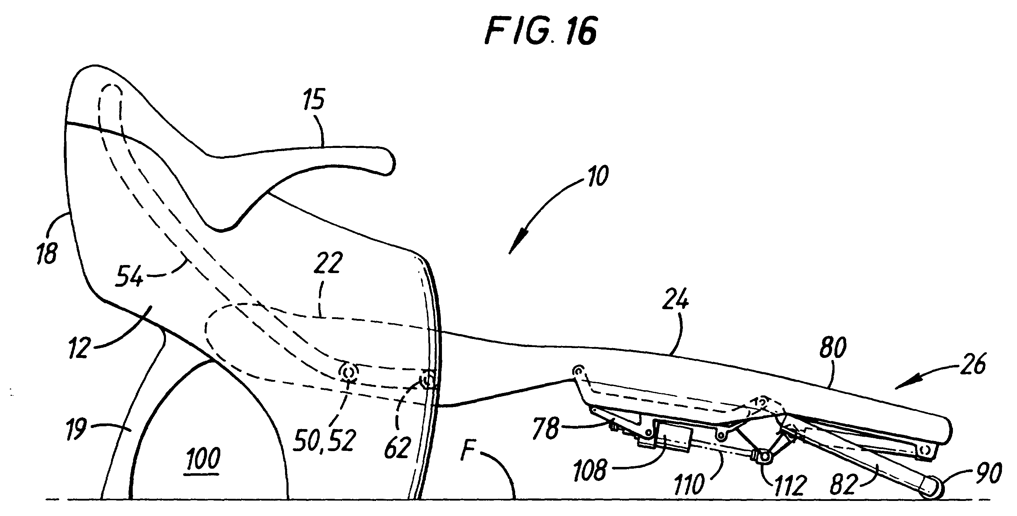

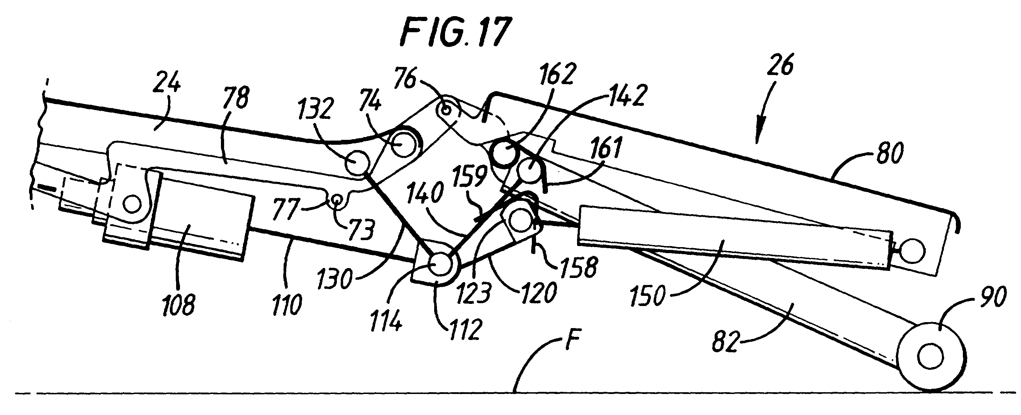

Continued operation of the drive unit 38, and operation of the linear actuator 110 in dependence on the operation of the drive unit 38 causes the movable part 20 of the seat 10 to be moved through one or more further predetermined ergonomic positions as shown, for example, in Figure 14, eventually to a fully reclined position as shown in Figure 16 and 17. In the fully reclined position, the back-rest, seat-pan and leg-rest form a substantially flat surface for a passenger to sleep on. Thus, by driving the movable part 20 of the seat 10 to the fully reclined position, the seat is converted into a bed, with the back-rest 22, seat-pan 24 and leg-rest assembly 26 being disposed adjacent to the floor of the vehicle F. In the fully reclined position, the back-rest 22, seat-pan 24 and ottoman 80 subtend an angle of about 11-13° to the floor of the vehicle. Aircraft generally fly at a pitch of about 3°, so when fitted to an aircraft, the actual inclination to the horizontal of the flat surface of the seat of the invention, in the fully reclined position, will be about 8-10°.

Conveniently, passenger-operable controls will be mounted within easy reach of a passenger using the seat 10, for instance in one of the arm rests 15, 17, for controlling operation of the drive unit 38. Such controls (not shown) will enable a passenger to select forward or reverse operation of the drive unit 38 for reclining the seat and returning it to the upright position respectively. Thus, when the seat is in the fully reclined position as shown in Figures 16 and 17, operation of the drive unit in the reverse direction will cause the back-rest 22 to travel rearwardly and upwardly the channels 54 in relation to the fixed housing 12. The back-rest will be progressively rocked from its reclined position towards the upright position, and the seat-pan 24 and leg-rest assembly 26 will be pulled rearwardly by the back-rest 22. As before, the motor 108 will be operated according to the position of the back-rest 22 along the channels 54, so that the linear actuator is returned to its retracted position, thus pulling the supporting portion 82 of the leg-rest assembly upright, and allowing the ottoman 80 to return towards its stowed position under the influence of gravity and the weight of itself and a passenger's legs on it.

It will be noted that when the movable part of the seat is in the fully reclined position as shown in Figures 16 and 17, the trailing edge 159 of the L-shaped plate 158 carried by the rockable arm 120 is positioned juxtaposed the inner struts 142 of the second bifurcated link 140. Further opening movement of the leg-rest assembly 26 relative to the seat-pan 24 will cause the trailing portion 159 of the L-shaped plate 158 to abut on the second link 140, thus preventing the rockable arm 120 from being moved to an over-centre position. Thus, the arm 120 and the gas strut 150 always subtend an angle less than 180°, so that on returning the ottoman 80 from the deployed position towards the stowed position, the rockable arm 120 can rock rearwardly (anti-clockwise in Figure 17) between the inner struts 142 of the second link 140 and eventually re-engage the abutment pins 73 carried by the brackets 78.

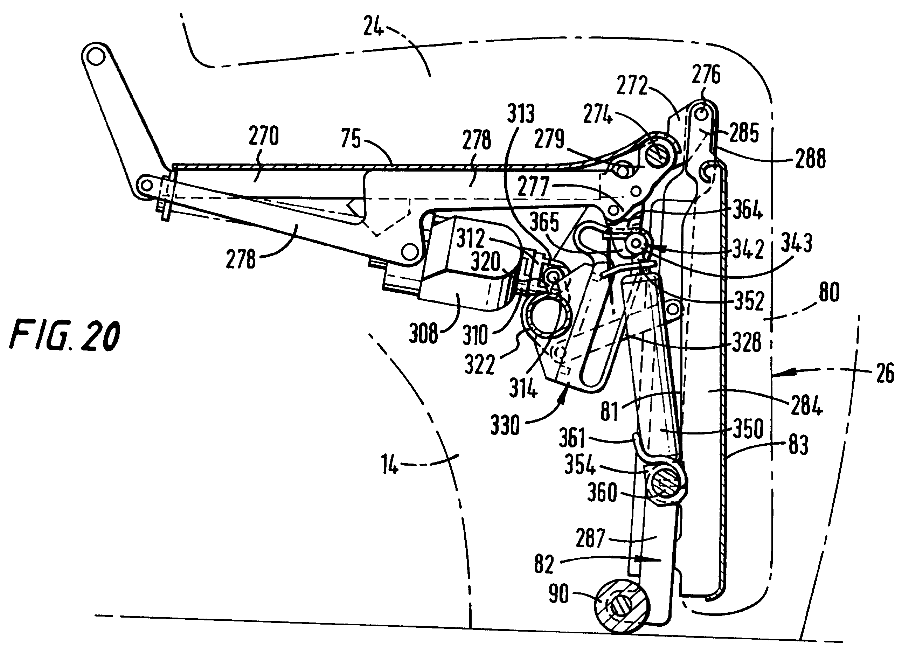

A seat 200 in accordance with a second embodiment of the present invention is illustrated in Figure 20 of the drawings. Many of the components of the second embodiment seat 200 are the same as in the seat 10 of the first embodiment described above, and for such components, the same reference numerals are used. The seat 200 of the second embodiment operates in substantially the same way as the seat 10 of the first embodiment, but differs principally in respect of the mechanism used for driving the leg-rest assembly. In particular, the seat 200 of the second embodiment comprises a fixed housing 12 having opposing side walls 14, 16, a back wall 18 and two spaced rear legs 19; and a movable part 20 that is accommodated within a fixed housing, which movable part comprises a back-rest 22, a seat-pan 24 and a leg-rest assembly 26. Said back-rest 22 is pivoted at its lower end 23 to the seat-pan 24. Said seat-pan 24 is pivoted at its forward end to the leg-rest assembly 26.

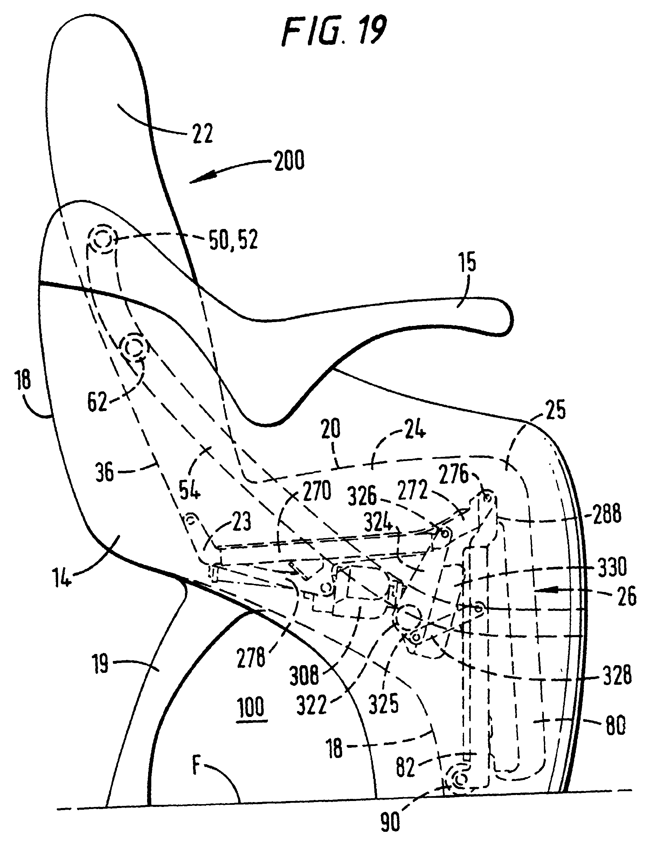

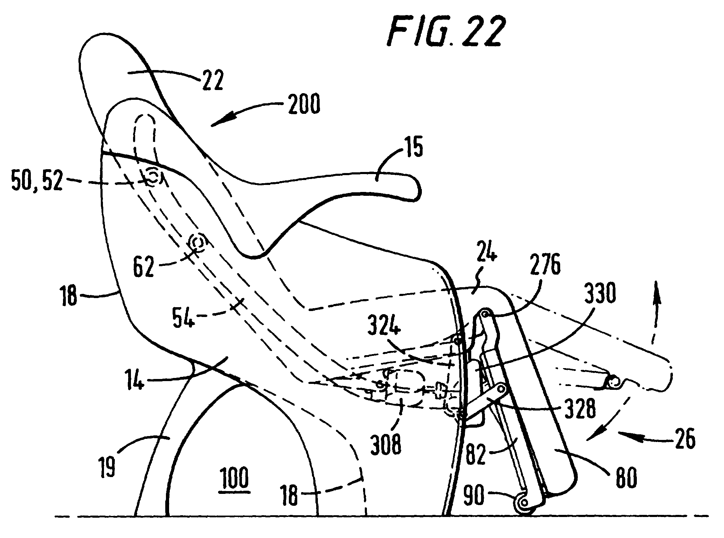

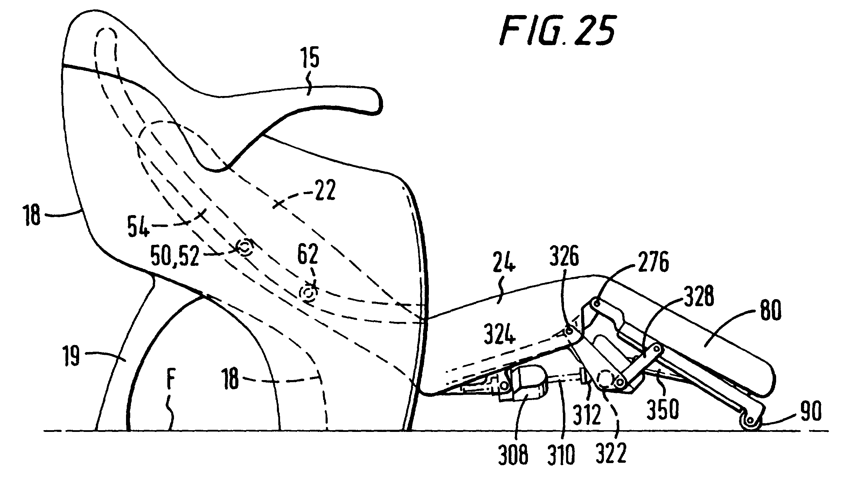

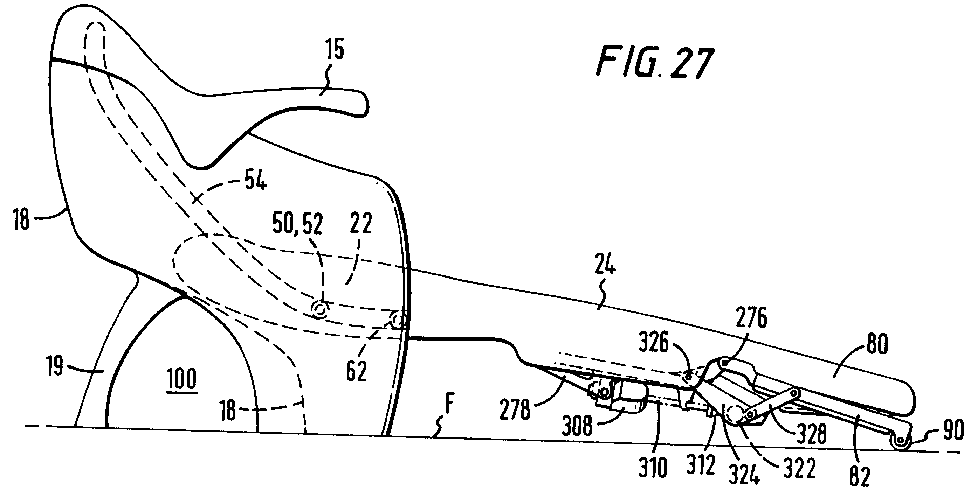

The back-rest 22 has a selectively operable, bi-directable drive unit mounted on its rear surface 36, which driving unit comprises an electric motor and a gear box for driving two coaxial, transverse drive shafts that each extend substantially horizontally to a respective lateral side of the back-rest 22. The end of each drive shaft carries a roller 50 and a pinion 52 that is fixedly secured to the end of the drive shaft for rotation therewith. The roller 50 and pinion 52 on the end of each drive shaft are accommodated with an elongate, curvilinear channel 54 formed in the adjacent side wall 14, 16 of the housing 12, which channel 54 accommodates an elongate insert that defines an elongate track for the roller 50. An elongate, curvilinear rack is fixedly secured to an upper part of the insert 53 in engagement with the pinion 52. As shown in Figure 19, the rear surface 36 of the back-rest 22 also carries, at each side thereof, a second roller 62 that is suitably mounted for rotation in a bearing. The second rollers 62 are spaced from the rollers 50 on the drive shafts and also engage in the track. Said bi-directional drive unit can be operated as described in relation to the seat 10 of the first embodiment to drive the movable part 20 of the second embodiment seat 200 continuously between an upright position as shown in Figure 19 and a fully reclined position as shown in Figure 27, through a plurality of pre-determined intermediate reclined positions such as shown in Figures 22 and 25.

As shown in Figure 19, the back-rest 22 is freely pivoted to the seat-pan 24 which comprises a sub-frame, including two forwardly directed side frame members 270. Each of said frame members 270 is formed with an upturned knee portion 272 as its forward end. A first transverse tube 274, as shown in Figure 20, extends between the frame members 270 and is mounted at each end to a respective one of the knee portions 272. Said first transverse tube 274 supports a front edge of a thin metal diaphragm 75 that supports the upholstery of the seat-pan 24. The upper extremity of the knee portion 272 defines a pivot point 276 for pivoting the seat-pan 24 to the leg-rest assembly 26.

Said leg-rest assembly 26 comprises an ottoman 80 and a floor engaging supporting portion 82. Said ottoman 80 comprises two spaced side arms 284, each of which has an L-shaped upper portion 285 which is pinned to the pivot point 276 of a respective knee portion 272, so that the ottoman 80 can pivot relative to the seat-pan 24 about said pivot point 276. Said sides arms 284 carry between them a diaphragm 83 which supports the upholstery of the ottoman.

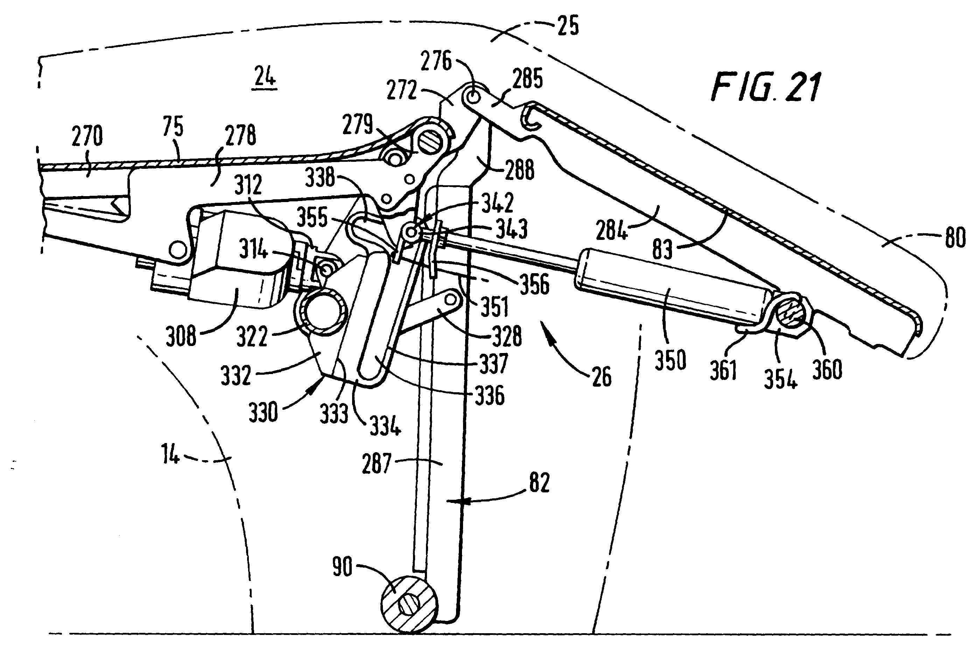

Said supporting portion 82 comprises two spaced levers 287, each of which has an angled portion 288 at its upper end (see Figure 21) which is pivoted to the seat-pan 24 at the pivot point 276. Said angled portion 288 of each lever 287 is pivoted to the knee portion 272 of the respective seat-pan frame member 270 using the same pin that is used for pivoting the ottoman 80 to the seat-pan 24. Said supporting portion 82 further comprises a ground-engaging roller 90 that is carried by and extends between the two levers 287. As can be seen from Figures 19 and 20, when the seat 200 is in the upright position, the levers 287 of the supporting portion 82 depend substantially vertically from the pivot point 276, and lie juxtaposed the ottoman 80 which also depends from said pivot point 276. The transverse spacing between the levers 287 is somewhat less than the spacing between the side arms 284 of the ottoman 80, and the ottoman 80 and supporting portion 82 are configured such that in the upright position the levers 287 of the supporting portion 82 nest between the side arms 284 of the ottoman 80. In the upright position, the supporting portion 82 abuts on the underside 81 of said ottoman 80.

Said seat-pan 24 carries a selectively operable, bi-directional, motorised linear actuator 310 that is suspended beneath the seat-pan 24 on two elongate brackets 278. Said brackets 278 are mounted on pins that extend between the side frame members 270 of the seat-pan 24, and each bracket 278 comprises a forward, upturned tongue portion 279 that is reamed and threaded over the first transverse tube 274 to support the front end of the bracket 278.

An electric motor 308 is mounted between the brackets 278 and used to drive the linear actuator 310. As in the first embodiment described above, a Kollmorgen motor and Kollmorgen linear actuator may be used. Said linear 310 comprises a nose portion 312 comprising a clevis connector 313. Said clevis connector 313 is pivotably attached to a lug 320 by means of a pin 314, which lug 320 is affixed substantially centrally on a transverse torsion tube 322 that extends substantially horizontally between the two side frame members 270 of the seat-pan 24. As best shown in Figure 19, each end of said torsion tube 322 is fixedly joined to the lower end 325 of a triangular swing plate 324, which swing plate 324 is pivoted at its upper end 326 to a respect one of the seat-pan side frames 270. The swing plates 324 thus carry between them the transverse torsion tube 322, which tube carries the nose portion 312 of the linear actuated 310 and thus supports part of the weight of the electric motor 308.

Each swing plate 324 is pivoted at its lower end 325 to a rear end of an interconnecting link member 328. Said interconnecting link member 328 is pivoted at its forward end to a respective one of the levers 287 of the supporting portion 82 of the leg-rest assembly 26 at a point intermediate the pivot point 276 and the ground-engaging roller 90, approximately level with the nose portion 312 of the linear actuator 310.

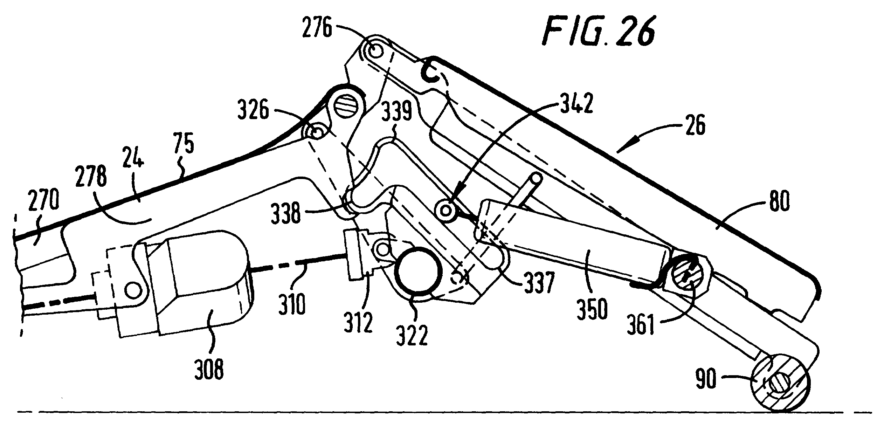

Said transverse torsion tube 322 comprises, substantially centrally thereon, a slideway assembly 330 comprising a block 332 that is fabricated with the torsion tube 322, and has a substantially planar front face 333. (See Figure 21). Said front face 333 of said block 332 mounts two transversely-spaced shapes 334 that are substantially the mirror image of each other and are mounted equidistant either side of the linear actuator 310. Each shape 334 defines an inwardly facing inverted L-shaped channel 336 having a forward linear, relatively long section 337, and an upper, rearwardly directed, relatively short section 338. Intermediate said relatively said long and short sections 337, 338, said each L-shaped channel has an arcuate elbow portion 339 (see Figure 26) which is somewhat recessed.

Said opposing L-shaped channels 336 define a slideway for a traveller 342, which traveller comprises two transversely spaced rollers 343, each of which engages with and is adapted to slide along a respective one of the channels 336. Said traveller 342 is mounted on a rear end 352 of a gas strut 350. A forward end 354 of said gas strut 350 is pivoted to a second transverse tube 360 that is carried by and extends between the side arms 284 of the ottoman 80. As best seen in Figures 20 and 21, said second transverse tube 360 carries a light wire spring 361 that acts against the forward end 354 of the gas strut 350 to urge said gas strut 350 forwardly towards the underside 81 of said ottoman 80.

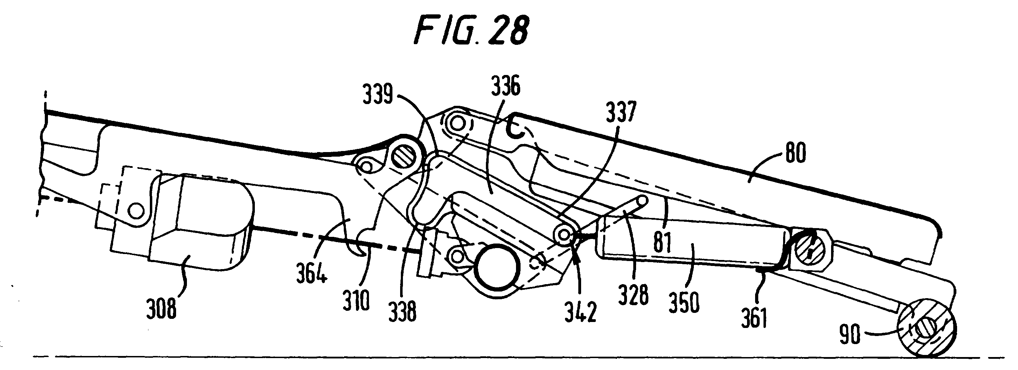

Juxtaposed said slideway assembly 330, each of said brackets 278 is formed with a depending lug 277. Said lugs 277 carry between them two depending hook members 364 which are fixedly secured to said lugs 277, as best shown in Figure 28. Said hook members 364 are disposed between the two blocks 332 and provide two forwardly-directed hooks 365.

As shown in Figures 19 and 20, when the movable part 20 of the seat 200 is in an upright position, with the ottoman 80 stowed, the traveller 342 at the rear end of the gas strut 350 is received within the recessed elbow portion 339 of each channel 336. Said hook members 364 are positioned such that the traveller 342 abuts on the hooks 365, which serve to imprison the traveller 342 in the elbow portion 339 of the channels 336. Said ottoman 80 may be raised continuously from the stowed position of Figure 20 to a deployed position as shown in Figure 21, independently of movement of the movable part 20 of the seat 200, by actuating said gas strut 350. For that purpose, an actuating nipple (not shown) is mounted on the rear end 352 of side gas strut 350, and a Bowden cable 351 is provided which extends through a plate 356 on the rear end 352 of the gas strut 350, and is connected to a lever 355 that is arranged to actuate said nipple. The outer sheath of the Bowden cable 351 engages the plate 356, so that operation of the Bowden wire causes the lever 355 to move to operate said nipple, thus releasing the gas strut. As in the first embodiment, the other end of the Bowden cable 351 may be connected to a button or other suitable operating device within convenient reach of a passenger using the seat 200. Said gas strut acts between the hook members 364 on the brackets 278 and the second transverse 360 on the ottoman 80. The ottoman 80 may be lowered by operating the nipple of the gas strut, again by means of the Bowden cable 351, and then manually pressing downwardly on the ottoman 80, which a passenger may do, for example, by using his or her legs, in order to return the ottoman 80 to the stowed position of Figure 20. As the ottoman 80 is moved to the stowed position, the gas strut 350 is shortened and thus re-energised for subsequent extension. It will be appreciated that as the traveller 342 on the rear end 352 of the gas strut 350 is imprisoned within the elbow portion of the slideway by the hooks 365, it is impossible to move the ottoman 80 away from the stowed position, without operating the gas strut 350. In that way, any inadvertent movement of the ottoman 80 away from the stowed position is avoided, for example in the event of a crash or emergency landing or other dynamic load situations.

As in the case of the seat 10 of the first embodiment, when the seat 200 of the second embodiment is in the upright position, the pinions 52 on each side of the back-rest 22 are positioned at the upper extremities of the upper channels 54. Operation of the drive unit on the back of the back-rest 22 causes the pinions to rotate in engagement with the racks provided in the channels 54. As a result, the back-rest 22 is caused to move translationally along the channels 54. The two spaced rollers 50, 62 on each side of the back-rest 22 serve to fix the rotational orientation of the back-rest relative to the fixed housing 12. Said channels 54 are shaped, so that as the back-rest 22 is driven along the channels 54, the back-rest 22 is caused progressively to recline rearwardly.

As the back-rest 22 is driven along the channels by the drive unit, the seat-pan 24 and leg-rest assembly 26 are pushed forwardly. As the seat-pan 24 is freely pivoted to the back-rest 22, the leg-rest assembly 26 remains in contact with the floor of the vehicle under the weight of the seat-pan and leg-rest assembly 26, and the weight of a passenger using the seat 200. The orientation of the seat-pan 24 is thus defined by the position and orientation of the back-rest 22 and the position and orientation of the leg-rest assembly 26.

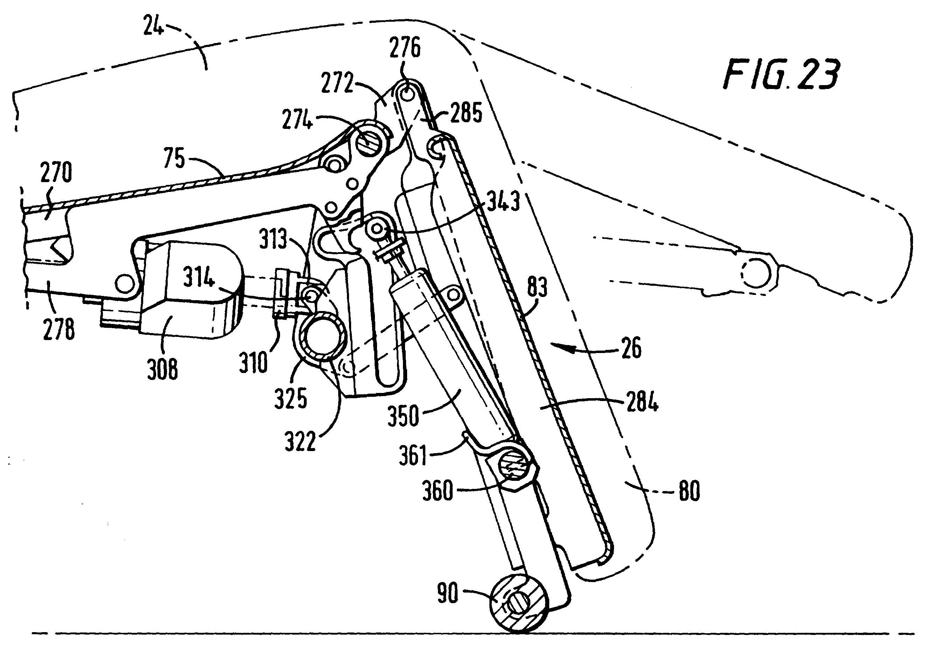

Operation of the electric motor 308 causes the linear actuator 310 to be displaced forwardly. Such movement of the actuator 310 is accommodated by rocking of the triangular swing plates 324 about the pivots at their upper ends 326, such that the torsion tube 322 is rotated in a rearward direction. Such rearward rotation of the torsion tube 322 causes the slideway assembly 330 to rotate about said torsion tube 322 such that the forward long section 337 of each channel 336 is moved from a substantially upright position as shown in Figure 20 towards a more horizontal position as shown in Figures 27 and 28. As the torsion tube 322 carried by the linear actuator 310 is moved forwardly, the interconnecting link members 328 push against the supporting portion 82 of the leg-rest assembly 26, which thus pivots about the pivot point 276 to increase the angle subtended by the supporting portion 82 and the seat-pan 24. As the torsion tube 322 is moved forwardly, the block 332 and shapes 334 defining the slideway for the traveller 342 are displaced forwardly clear of the hook members 364, thus releasing the traveller 342 from the elbow portion 339 of the L-shaped channels 336 as shown in Figure 23. As the supporting portion 82 rocks about the pivot point 276, it pushes against the underside 81 of the ottoman 80, thus progressively raising the ottoman 80 towards the deployed position. As the ottoman 80 is raised from the stowed position, without actuation of the gas strut 350, the rear 352 of the gas strut 350 is pulled forwardly along the long-sections of the L-shaped channels 336 as lost motion to allow movement of the ottoman to the deployed position.

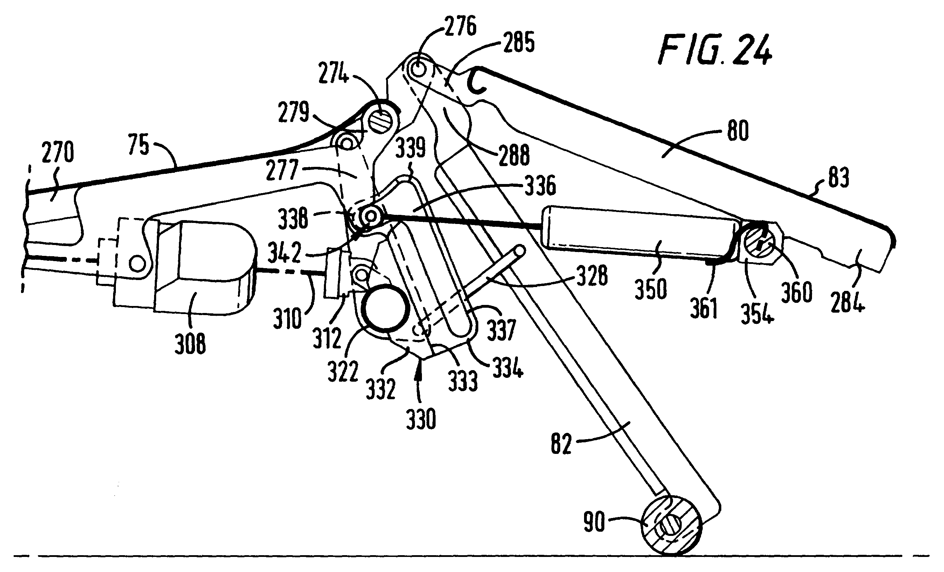

Operation of the linear actuator 310 is controlled according to the position of the back-rest 22 along the channels 54, in the same way as in the seat 10 of the first embodiment described above. The moveable part 20 of the seat 200 can be stopped at any desired position, and will be held in position by the locking actions of the motor on the back of the back-rest 22 and the motor 308. At any position, the gas strut 350 may be actuated to raise further the ottoman 80 as shown in Figures 22 to 24. As mentioned above, when the ottoman 80 is raised by operation of the linear actuator 310, without operation of the gas strut 350, the rear end of the gas strut 352 is displaced from the hook members 364. Thus, if the gas strut is actuated when the seat is in a reclined position as shown, for example, in Figure 24, then extension of the gas strut 350 causes the traveller 342 to travel rearwardly into and along the short section 338 of each channel to re-engage the hooks 365 of the hook members 364 as shown in Figure 24. Thereafter, continued actuation of the gas strut 350 causes the ottoman 80 to raise as far as the gas strut will allow.

Continued operation of the main drive unit on the back of the back-rest 22, and operation of the linear actuator of 310 in dependence thereon causes the moveable part 20 of the seat 200 to be moved through one or more predetermined ergonomic positions as shown, for example, in Figure 25, eventually to a fully reclined position as shown in Figures 27 and 28. In the fully reclined position, the back-rest, seat-pan and leg-rest form a substantially flat surface for a passenger to sleep on. As with the seat 10 of the first embodiment, in the fully reclined position, the back-rest 22, seat-pan 24 and ottoman 80 of the seat 200 of the second embodiment subtend an angle of about 11-13° to the floor of the vehicle.

Passenger-operable controls are mounted within easy reach of a passenger using the seat 200 for controlling operation of the main drive unit on the back of the back-rest 22. Such controls enable the passenger to select forward or reverse operation of the drive unit for reclining the seat or returning it to the upright position. When the seat is in the fully reclined position as shown in Figures 27 and 28, operation of the drive unit in the reverse direction will cause the back-rest 22 to travel rearwardly and upwardly in the channels 54 in relation to the fixed housing 12. Said motor 308 is operated according to the position of the back-rest 22, so that the linear actuator is returned to its retracted position, thus pulling the supporting portion 82 of the leg-rest assembly 26 upright, and allowing the ottoman 80 to return towards its stowed position under the influence of gravity and the weight of itself and a passenger's legs on it.

It will be noted that when the movable part of the seat is in the fully reclined position as shown in Figures 27 and 28, the light wire spring 361 acts on the gas strut 350 to urge the gas strut upwardly towards the underside 81 of the ottoman 80, so that on retracting the linear actuator 310, the spring 361 ensures that the traveller 342 is caused to move correctly back up the long section 337 of each L-shaped channel 336. As the actuator 310 is retracted, the slideway assembly 330 is moved rearwardly towards the depending hook member 364, and in the upright position, the traveller 342 on the gas strut 350 re-engages said hooks 365 in the elbow portion 339 of said slideway.

When installed on a vehicle such, for example, as an aircraft, seating units in accordance with the present invention may be fitted one behind another as shown in Figure 29 at a pitch P which falls within the range of pitches conventionally used in the business class section of a passenger aircraft, for example about 1.4 metres (55 inches). In Figure 29, a seat 10 is shown behind a seat in front 10''. The pitch between the seat 10, 10'' is such that when the seat behind 10 is moved to the fully reclined position as shown in Figure 29, the leg-rest assembly 26 of that seat is received in the foot-space 100'' defined by the seat in front 10''. This represents an extremely efficient use of the space on a vehicle, as the only "dead space" is that occupied by the back wall 18 of each seat 10, 10'' where it meets the forward cross-beam 30. By mounting the drive unit 38 and linear actuator 110 of each seat 10 on the underside of the movable part 20, there is no need to site any working parts of the seat on or adjacent to the floor F of the vehicle. This allows all the available space to be used, and moreover, removes the working parts of the seats from the floor where dust and other detritus are likely to collect.

The present invention thus provides an improvement in the seating unit of EP-A-0869061 in which an ottoman can be raised to a deployed position independently of reclining of the whole of the seat, and a lost motion device is provided to allow the ottoman 80 to be raised independently of the gas strut 150 when the seat as a whole is moved towards the fully reclined position.

## Claims

1. A seat for passenger vehicle comprising a first fixed portion for supporting the seat adjacent to a floor of a vehicle; a second moveable portion comprising a back-rest, a seat-pan and a leg-rest that is pivoted relative to the seat-pan; reclining means for causing or allowing movement of the moveable portion of the seat relative to the fixed portion between an upright position and a fully reclined position, such that as the moveable portion is reclined, the seat-pan is lowered towards the floor of the vehicle and the leg-rest remains in contact with the floor, such that the leg-rest is caused or allowed to pivot from a stowed position to a deployed position; characterised in that the leg-rest comprises a floor-engaging trundling member, a leg-supporting member that is pivoted relative to the trundling member, selectively operable actuating means that react against the seat-pan for moving the leg-supporting member to any desired position between said stowed and deployed positions independently of movement of the seat-pan, and lost-motion means between the actuating means and the seat-pan to allow the leg-rest to be moved to the deployed position when the seat is reclined independently of the actuating means.

2. A seat as claimed in claim 1, characterised by a free-pivot between the back-rest and the seat-pan; and locking driving means between the seat-pan and leg-rest for driving the leg-rest between the stowed and deployed positions as the moveable portion of the seat is reclined.

3. A seat as claimed in claim 2, characterised in that said locking driving means comprise a linear actuator and a selectively operable, bi-directional motor for operating the actuator.

4. A seat as claimed in claim 3, characterised in that said linear actuator is connected between the motor and the floor-engaging trundling member.

5. A seat as claimed in claim 4, characterised in that said motor is mounted beneath the seat-pan, and the actuator is connected to the trundling member by first lever means.

6. A seat as claimed in claim 5, characterised in that the actuator is also connected to the seat-pan by second lever means for additional support.

7. A seat as claimed in claim 5 or claim 6, characterised in that said linear actuator comprises a transverse torsion bar that is suspended from the seat-pan by two or more depending levers.

8. A seat as claimed in claim 7, characterised in that said first lever means comprise two or more further connecting levers between the depending levers and the trundling member.

9. A seat as claimed in any of claims 4 to 8 characterised in that said floor-engaging trundling member is provided with abutment means that are adapted to engage the leg-supporting member for pushing the leg-support member from the stowed position to the deployed position when the linear actuator is operated to drive the trundling member.

10. A seat as claimed in any preceding claim, characterised in that said reclining means further comprise means for progressively rocking the back-rest from an upright position to a fully reclined position as the moveable part is moved between said upright and fully reclined positions.

11. A seat as claimed in claim 10, characterised in that said reclining means comprise track means on said fixed part of the seat, and guiding means on the back-rest adapted to engage the track means at two or more spaced positions, whereby as the seat is reclined, the guiding means move along the track, and the track is configured such that the back-rest is progressively rocked from the upright position to the fully reclined position.

12. A seat as claimed in any preceding claim, characterised in that, in the fully reclined position, the back-rest, seat-pan and leg-rest form a substantially flat surface.

13. A seat as claimed in claim 12, characterised in that said flat surface, in the fully reclined position, subtends an angle of about 10°-15° with the floor of the aircraft.

14. A seat as claimed in claim 11, characterised in that said track means accommodate a rack, and said back-rest carries one or more rotatable pinions adapted to engage the rack, and selectively operable bi-directional motor means for driving said one or more pinions, thereby to cause movement of said moveable portion along the track between said upright and reclined positions.

15. A seat as claimed in claim 14, characterised in that said motor means for driving said pinion(s) are mounted on the back of the back-rest.

16. A seat as claimed in any preceding claim, characterised in that said selectively operable actuating means comprise a linearly extendable member that is connected to the leg-support member at one end and to said lost-motion means at the other end.

17. A seat as claimed in claim 16, characterised in that said lost-motion means are connected to the linear actuator.

18. A seat as claimed in claim 16 or claim 17, characterised in that said linearly extendable member is pneumatically operated.

19. A seat as claimed in any preceding claim, characterised in that said lost-motion means comprise a rockable arm which is adapted to engage an abutment on the seat-pan and can be displaced from said abutment as the seat is reclined to allow the leg-rest to move to the deployed position.

20. A seat as claimed in claim 19, characterised in that said trundling member comprises a stop member that is adapted to entrap the rockable arm in the stowed position, when the trundling member is in the stowed position, so as to prevent the leg-supporting member from being inadvertently moved to the deployed position, for instance under dynamic load conditions.

21. A seat as claimed in claim 20, characterised in that said rockable member carries a second stop member that is adapted to engage the first lever means between the linear actuator and the trundling member to prevent the rockable arm from being moved to an over-centre position.

22. A seat as claimed in any of claims 1 to 18, characterised in that said lost-motion means comprise a slide-way and travelling means imprisoned by and adapted to slide within the slide-way, which slide-way is held fast in relation to the seat-pan when the trundling means are at rest.

23. A seat as claimed in claim 22, characterised in that the other end of the linearly extendable member is connected to the travelling means, whereby said other end is able to move relative to the seat-pan to provide lost motion in relation thereto.

24. A seat as claimed in claim 22 or claim 23, characterised in that said travelling means are adapted to engage abutment means on the seat pan for the linearly extendable member to react against, and may be displaced therefrom along the slide-way as the seat is reclined to allow the leg-rest to move to the deployed position.

25. A seat as claimed in any of claims 22 to 24, characterised in that retaining means are provided for retaining the travelling member in a fixed datum position when the seat is upright to prevent the leg-supporting mechanism from being inadvertently moved to the deployed position.

26. A seat as claimed in any of claims 22 to 25, characterised in that said slide-way is affixed to the seat-pan.

27. A seat as claimed in any of claims 22 to 25, characterised in that the slide-way is carried by the linear actuator such that the slide-way is caused to move forwardly as the seat is reclined.

28. A seat as claimed in claim 24, characterised in that said abutment means on the seat-pan are positioned to imprison the travelling means in the fixed datum position when the seat is upright and the trundling member is stowed, and when the linear actuator is operated, said slide-way may be displaced relative to said abutment so as to release the travelling means from the datum position and to allow said lost motion.

29. A seat as claimed in any of claims 22 to 28, characterised in that said slide-way has a generally L-shaped configuration, with the datum position being disposed at the elbow of the L-shape.

30. A seat as claimed in claim 29, characterised in that said abutment means comprise one or more hook-shaped members attached to the underside of the seat-pan and positioned to retain said travelling means in the elbow of the L-shape when the trundling member is stowed.

31. A seat as claimed in any preceding claim, characterised in that said reclining means further comprise controlling means for controlling operation of the locking drive means according to the position of the seat between the upright and fully reclined positions.

32. A seat as claimed in claim 31, characterised in that said controlling means comprise means for detecting the position of the moveable part of the seat between the upright and fully reclined positions, a memory device for storing information concerning the desired extension of the linear actuator according to the position of the moveable part, and processing means adapted to control operation of the linear actuator in response to input from said memory device and said detecting means.
